# EUROPEAN PATENT APPLICATION

(11) **EP 4 836 122 A1**
(43) Date of publication of application: **04.11.2026**
(21) Application number: 26162196.5
(22) Date of filing: 04.03.2026
(51) Int. Cl.: H01M 50/209, H01M 50/271

(54) **BATTERY MODULE**

(30) Priority: 30.04.2025 KR 20250057375
(71) Applicant: SAMSUNG SDI CO., LTD., Yongin-si, Gyeonggi-do 17084 (KR)
(72) Inventor: KIM, Youngdeok, Yongin-si, Gyeonggi-do 17084 (KR)
(74) Representative: Gulde & Partner

(57) **Abstract**

A battery module includes battery cells arranged such that main surfaces of the battery cells are adjacent to each other along a first direction; a first plate portion on a main surface of a battery cell located outermost among the battery cells; and a second plate portion on side surfaces of the battery cells. The second plate portion covers a side surface of the first plate portion, the first plate portion includes a protrusion protruding in the first direction, and the second plate portion includes a first bent portion surrounding the protrusion.

## Description

### BACKGROUND

### 1. Field

The disclosure relates to a battery module.

### 2. Description of the Related Art

Secondary batteries are batteries that can be charged and discharged, unlike primary batteries that cannot be recharged. Low-capacity battery cells may be used in small, portable electronic devices, such as smartphones, feature phones, notebook computers, digital cameras, and camcorders, whereas high-capacity battery cells are widely used as power sources for motors in hybrid and electric vehicles and as power storage cells. A battery cell includes an electrode assembly including a cathode and an anode, a case receiving the electrode assembly, and electrode terminals connected to the electrode assembly.

In order to provide high energy density (e.g., for motor driving of a hybrid vehicle), a high-capacity battery cell may be used as a battery module in which a plurality of battery cells are connected in series and/or in parallel.

In this case, the plurality of battery cells are housed by a module frame including side plates, end plates, and bottom plates. To maximize the capacity of the battery cells when connecting the respective plates, a welding method using laser or the like is typically used to minimize the space occupied by the plates and enable rapid assembly of the plates.

Related art welding methods such as laser welding have the problem that as the size of the battery module increased and the weight of the battery cells increased, it became necessary to form two or more welding lines for connecting the plates, and thus significant time and economic costs were incurred.

The above-described information disclosed in the background technology of this invention is only intended to improve understanding of the background of the disclosure and therefore may include information that does not constitute prior art.

### SUMMARY

Embodiments of the disclosure provide a battery module in which coupling between battery plates is rapid and readily achieved.

Embodiments of the disclosure provide a battery module in which coupling strength between battery plates is increased compared to a related art battery module.

In addition, embodiments of the disclosure provide a battery module manufactured by an economical battery module manufacturing process.

However, the objects of the disclosure are not limited to the object mentioned above, and other objects that are not mentioned can be clearly understood by those skilled in the art from the following description of the disclosure. The present invention is set out in the appended set of claims, wherein the drawings and respective descriptions relate to advantageous embodiments thereof.

An embodiment of the disclosure discloses a battery module including: a battery cells arranged such that main surfaces of the battery cells are adjacent to each other along a first direction; a first plate portion is on the main surface of a battery cell located outermost among the battery cells; and a second plate portion on side surfaces of the battery cells. The second plate portion covers a side surface of the first plate portion, the first plate portion includes a protrusion protruding in the first direction, and the second plate portion includes a first bent portion surrounding the protrusion.

In an embodiment, the protrusion may extend along a height direction of the first plate portion.

In an embodiment, the protrusion may include a first plane extending along the first direction, a second plane at an angle in a range from approximately 10° to approximately 80° with respect to the first plane, and a first connecting portion connecting the first plane to the second plane.

In an embodiment, the first plane may be substantially parallel to the second plate portion.

In an embodiment, the first bent portion may include a first contact surface in contact with the first plane, a second contact surface in contact with the second plane, and a second connecting portion connecting the first contact surface to the second contact surface.

In an embodiment, the second plate portion may include a first recessed portion recessed inwardly from the second plate portion on a surface opposite to the first contact surface.

In an embodiment, a thickness of the second plate at a position where the first recessed portion is located may be in a range from approximately 25 % to approximately 70 % of an average thickness of the second plate at a position where the first recessed portion is not located.

In an embodiment, the second plate portion may include a second bent portion extending from the first bent portion, and the second bent portion may be bent in a direction opposite to the first bent portion.

In an embodiment, the second bent portion may include an extension surface extending away from the first plate portion and a third connecting portion connecting the extension surface to the second contact surface.

In an embodiment, the first plate portion may include a second recessed portion recessed inwardly from the first plate portion, and a curved surface may be in the second recessed portion.

Another embodiment of the disclosure discloses a battery module including: battery cells arranged such that main surfaces of the battery cells are adjacent to each other along a first direction; a first plate portion on the main surface of a battery cell located outermost among the battery cells; and a second plate portion on side surfaces of the battery cells. The second plate portion covers a side surface of the first plate portion, the first plate portion includes a protrusion protruding in the first direction, the second plate portion includes a first bent portion surrounding the protrusion, and the battery module further includes a coupling portion that penetrates the protrusion and couples the protrusion to the first bent portion.

In an embodiment, the protrusion may extend along a height direction of the first plate portion.

In an embodiment, the protrusion may include a first plane extending along the first direction, a second plane at an angle in a range from approximately 10° to approximately 80° with respect to the first plane, and a connecting portion connecting the first plane to the second plane.

In an embodiment, the first plane may be substantially parallel to the second plate portion.

In an embodiment, the first bent portion may include a first contact surface in contact with the first plane, a second contact surface in contact with the second plane, and a second connecting portion connecting the first contact surface to the second contact surface.

In an embodiment, the coupling portion may penetrate the protrusion and connect the first contact surface to the second contact surface.

In an embodiment, the first plate portion may include a welded portion on a surface opposite to the first contact surface, and the welded portion may be heated to form the coupling portion.

In an embodiment, the second plate portion may include a second bent portion extending from the first bent portion, and the second bent portion may be bent in a direction opposite to the first bent portion.

In an embodiment, the second bent portion may include an extension surface extending away from the first plate portion and a third connecting portion connecting the extension surface and the second contact surface.

In an embodiment, the first plate portion may include a second recessed portion recessed inwardly from the first plate portion, and the third connecting portion may be in the second recessed portion.

### BRIEF DESCRIPTION OF THE DRAWINGS

The accompanying drawings illustrate at least an embodiment of the disclosure, and together with the detailed description of the disclosure described below, serve to provide further understanding of the technical aspects of the disclosure, and thus, the disclosure is not construed as being limited to the statements set forth in the drawings:
FIG. 1 is a perspective view schematically illustrating an example of a battery module according to an embodiment of the disclosure;
FIG. 2 is a perspective view schematically illustrating an example of a battery cell of the battery module of FIG. 1;
FIG. 3 is a cross-sectional view taken along line III-III' of FIG. 2;
FIG. 4 is an exploded perspective view schematically illustrating an embodiment of plates of the battery module of FIG. 1;
FIG. 5A is a perspective view illustrating second plate portions covering side surfaces of first plate portions in the battery module according to FIG. 4;
FIG. 5B is an enlarged view schematically illustrating an embodiment of region A in the battery module according to FIG. 5A;
FIG. 5C is a cross-sectional view taken along line IV-IV' of FIG. 5B;
FIG. 6A is a perspective view schematically illustrating an embodiment of a battery module in which a coupling portion that couples a first plate portion and a second plate portion is formed in the battery module according to FIG. 5A;
FIG. 6B is an enlarged view schematically illustrating an embodiment of region B in the battery module according to FIG. 6A; and
FIG. 6C is a cross-sectional view taken along line V-V' of FIG. 6B.

### DETAILED DESCRIPTION

As the disclosure may undergo many different modifications and may have various embodiments, particular embodiments will be illustrated in the drawings and described in detail in the written description.

It will be understood that, although the terms "first," "second," etc. may be used herein to describe various components, these components are not limited by these terms. These terms are only used to distinguish one component from another.

The terminology as used herein is used to describe particular embodiments, but not intended to being limiting. The singular forms "a" and "an" are intended to include the plural forms as well, unless the context clearly indicates otherwise. In addition, in the drawings, dimensions of layers are exaggerated, omitted, or schematically illustrated for clarity and convenience of description, and dimensions of constituent elements do not necessarily reflect the actual dimensions thereof.

In the description of each element, when one element is referred to as being formed "on" or "under" another element, it can be directly on or under another element or can be indirectly formed such that an intervening element is also present. The terms "on" and "under" may be understood on the basis of the drawings.

Hereinafter, embodiments of the disclosure will be described in detail with reference to the attached drawings. In describing with reference to the accompanying drawings. Those components that are the same or are in correspondence are rendered the same reference numeral and redundant descriptions thereof will be omitted.

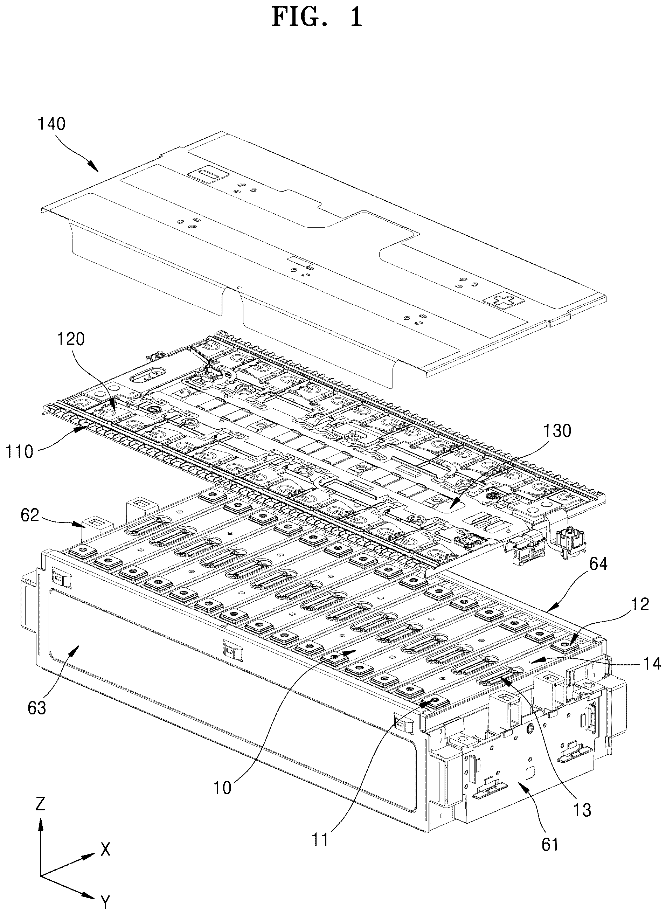

FIG. 1 is a perspective view schematically illustrating an example of a battery module according to an embodiment of the disclosure.

Referring to FIG. 1, a battery module 100 according to an embodiment of the disclosure includes a plurality of battery cells 10 and may include a housing portion 60.

In one or more embodiments, the plurality of battery cells 10 are arranged in a first direction Y. According to an embodiment, a plurality of battery cells 10 are arranged such that main surfaces of the plurality of battery cells 10 are adjacent to each other along a first direction Y. In FIG. 1, prismatic battery cells 10 are illustrated as an example, but the disclosure is not limited thereto, and the battery cells 10 may include various types of battery cells such as cylindrical, pouch-type, or coin-type battery cells.

The housing portion 60 may house (accommodate) the plurality of battery cells 10 arranged in the first direction Y.

The housing portion 60 may include end plates 61 and 62, side plates 63 and 64, a bottom plate, and an upper cover 140.

The end plates 61 and 62 are located on main surfaces of the battery cells 10 that are located outermost among the plurality of battery cells 10 arranged in the first direction Y.

That is, the end plates 61 and 62 may be located at both ends of the battery cells 10 in the first direction Y so as to fix the positions of the battery cells 10 and apply pressure to the battery cells 10 in response to swelling of the battery cells 10 occurring.

The side plates 63 and 64 are located on side surfaces of the plurality of battery cells 10 arranged in the first direction Y, and may be coupled to the end plates 61 and 62. In one or more embodiments, the side plates 63 and 64 may be coupled to the end plates 61 and 62 to house the plurality of battery cells 10 and surround the side surfaces of the battery cells 10.

When the side plates 63 and 64 and the end plates 61 and 62 are positioned, the side plates 63 and 64 and the end plates 61 and 62 may be joined together at the surfaces in contact with each other by welding or other suitable methods. The welding or other methods may be, for example, laser welding of one or more lines.

The bottom plate may be located on the bottom surfaces of the plurality of battery cells 10 arranged in the first direction Y to support the battery cells 10.

The upper cover 140 may be located above the plurality of battery cells 10 arranged in the first direction Y. The upper cover 140 may prevent (or at least mitigate) foreign substances or the like from penetrating into the battery cells 10.

The end plates 61 and 62, the side plates 63 and 64, the bottom plate, and the upper cover 140 may be coupled by convex-concave engagement, fitting engagement, coupling by a separate member, or the like to form the housing portion 60, and the coupling method is not limited thereto.

The battery module 100 may further include busbars 120 and a holder 110.

The busbar 120 may electrically connect one battery cell 10 to another battery cell 10 adjacent thereto.

A first terminal 11 of one battery cell 10 may be electrically connected to a second terminal 12 of an adjacent battery cell 10 through the busbar 120, and a second terminal 12 of the same battery cell 10 may be electrically connected to a first terminal 11 of another adjacent battery cell 10 through another busbar 120. Although FIG. 1 illustrates a series connection, the structure is not limited thereto, and various connection structures may be adopted as needed, such as a parallel connection or a combination of parallel and series connections. In addition, the number and arrangement of battery cells 10 are not limited to the structure shown in FIG. 1 and may be modified.

The holder 110 may be located on the plurality of battery cells 10 and may accommodate the busbar 120. In addition, the holder 110 may include a sensing unit configured to sense the temperature of the battery cells 10, the pressure inside the battery module 100, and the like. The sensing unit may perform various protection functions to improve (increase) the stability and lifespan of the battery module 100. For example, the sensing unit may be connected to a battery management system (BMS). The upper cover 140 may be located on the holder 110.

Each of the busbars 120 may be provided with a terminal for temperature measurement and/or a terminal for voltage measurement, and the measured information may be transmitted to the sensing unit through wiring for integrated management.

Each of the plurality of battery cells 10 may include a vent 13 at the upper portion, serving as a gas discharge passage, and the holder 110 may further include holes 113 that overlap (e.g., are substantially aligned with) the vents 13. The holes 113 may serve as discharge passages for high-temperature gas released through the vents 13 in response to the temperature of the battery cells 10 increasing.

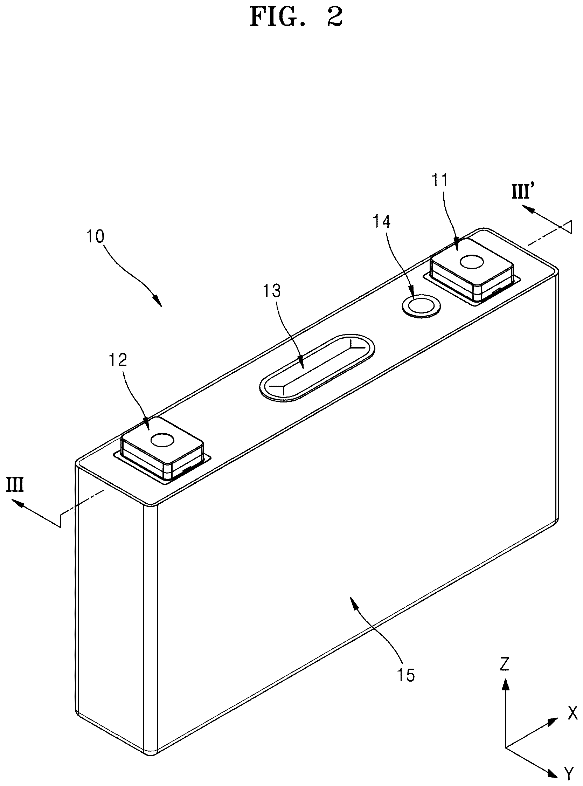

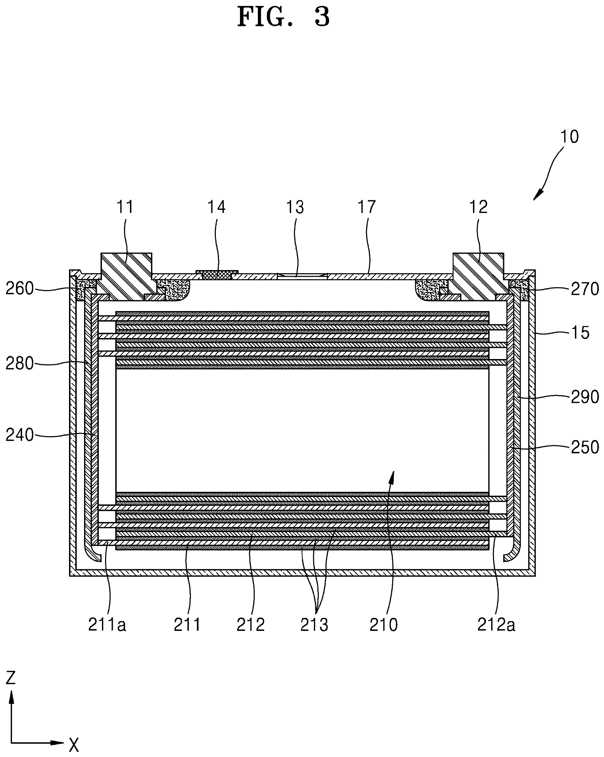

FIG. 2 is a perspective view schematically illustrating an embodiment of the battery cell of the battery module of FIG. 1, and FIG. 3 is a cross-sectional view taken along line III-III' of FIG. 2.

Referring to FIGS. 2 and 3 together, the battery cell 10 according to an embodiment may include at least one electrode assembly 210, which is formed by winding a positive electrode 211, a negative electrode 212, and a separator 263, as an insulator, interposed between the positive electrode 211 and the negative electrode 212, and a case 15 in which the electrode assembly 210 is housed (accommodated).

The battery cell 10 according to an embodiment is described herein as being a prismatic lithium-ion battery cell as an example. However, the present disclosure is not limited thereto, and the battery cells may be any other type of battery cells, such as lithium polymer battery cells or cylindrical battery cells.

The positive electrode 211 and the negative electrode 212 may each include a coated portion which may be a region coated with an active material on a current collector formed of a thin metal foil and may respectively include uncoated portions 211a and 212a which may be regions not coated with an active material.

The positive electrode 211 and the negative electrode 212 are wound with the separator 213, which is an insulator, interposed between them. However, the present disclosure is not limited thereto, and the electrode assembly 210 may alternatively be configured in a stacked structure in which a plurality of sheets of positive electrodes and negative electrodes are alternately stacked with the separator interposed between them.

The case 15 may define the overall exterior of the battery cell 10 and may include a conductive metal such as aluminum, aluminum alloy, or nickel-plated steel. In some embodiments, the case 15 may provide a space in which the electrode assembly 210 is accommodated.

The battery cell 10 may include a cap plate 17 configured to cover an opening of the case 15, and the case 15 and the cap plate 17 may each include a conductive material. In one or more embodiments, a first terminal 11 and a second terminal 12, electrically connected respectively to the positive electrode 211 and the negative electrode 212, may pass through the cap plate 17 and protrude to an outside of the case 15.

In addition, the outer peripheral surfaces of upper columns of the first terminal 11 and the second terminal 12 that may protrude outward from the cap plate 17 may each be threaded and fixed to the cap plate 17 by a nut.

However, the present disclosure is not limited thereto, and the first terminal 11 and the second terminal 12 may be have a rivet structure and be riveted, or the first terminal 11 and the second terminal 12 may be welded to the cap plate 17.

In addition, the cap plate 17 may be a thin plate and may be coupled to the opening of the case 15. The cap plate 17 may include an electrolyte injection port 14 into which a sealing stopper may be installed, and the vent 13 may have a notch formed therein.

The first terminal 11 and the second terminal 12 may be electrically connected to the current collectors, which include first and second current collectors 240 and 250 (hereinafter, referred to as positive and negative current collectors, respectively), by welding to the positive uncoated portion 211a and the negative uncoated portion 212a, respectively.

For example, in one or more embodiments, the first terminal 11 and the second terminal 12 may be joined to the positive and negative current collectors 240 and 250, respectively, by welding. However, the present disclosure is not limited thereto, and the first and second terminals 11 and 12 and the positive and negative current collectors 240 and 250 may be integrally coupled to each other.

An insulating member may be between the electrode assembly 210 and the cap plate 17. In one or more embodiments, the insulating member may include a first lower insulating member 260 and a second lower insulating member 270, and each of the first and second lower insulating members 260 and 270 may be between the electrode assembly 210 and the cap plate 17.

In some embodiments, one end of a separating member may be between the insulating member and the first and second terminals 11 and 12 so as to face one side surface of the electrode assembly 210.

In one or more embodiments, the separating member may include a first separating member 280 and a second separating member 290.

Accordingly, one end of the first separating member 280 and one end of the second separating member 290 may be installed so as to face opposite side surfaces of the electrode assembly 210, between the first lower insulating member 260 and the first terminal 11, and between the second lower insulating member 270 and the second terminal 12, respectively.

As a result, the first terminal 11, which may be welded to the positive current collector 240, may be connected to one end of the first lower insulating member 260 and one end of the first separating member 280. Additionally, the second terminal 12, which may be welded to the negative current collector 250, may be connected to one end of the second lower insulating member 270 and one end of the second separating member 290.

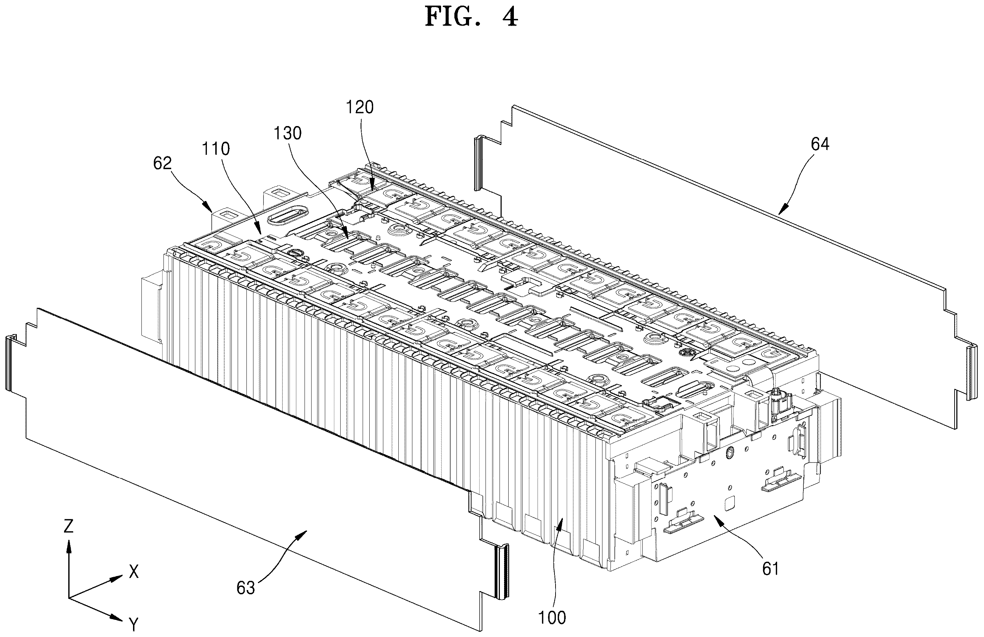

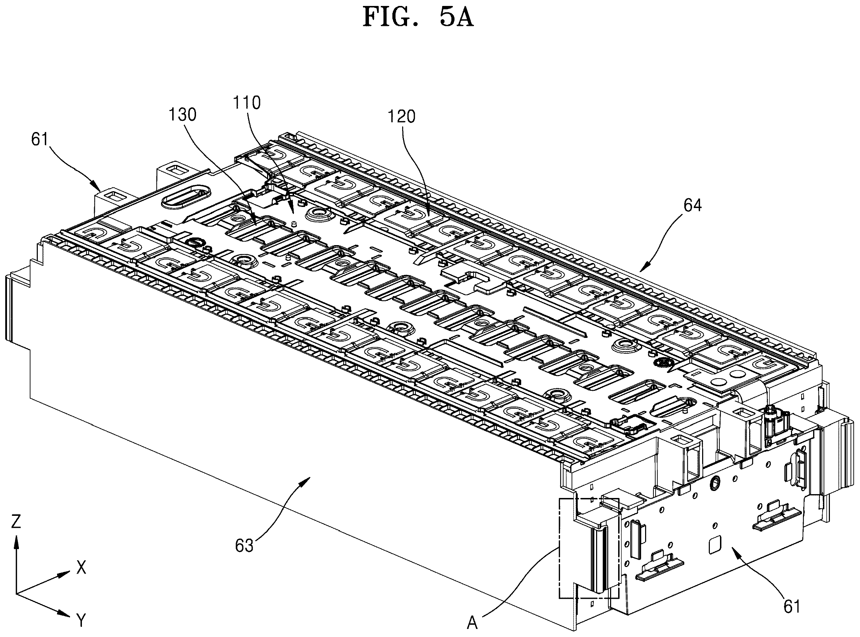

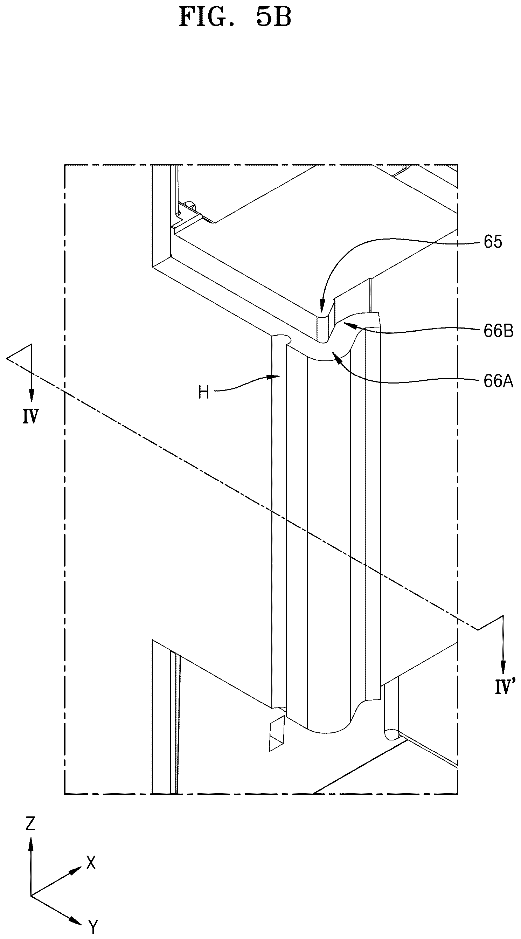

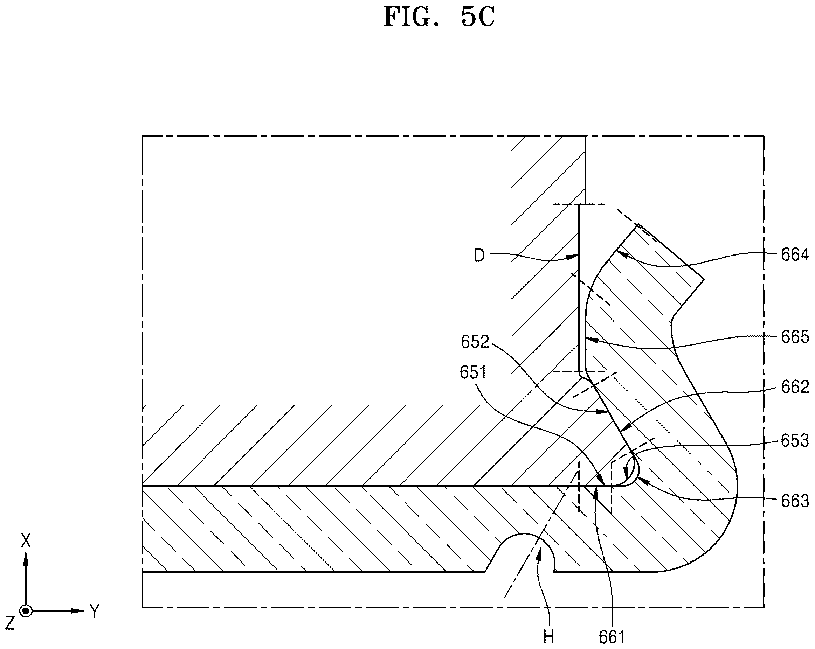

FIG. 4 is an exploded perspective view schematically illustrating an embodiment of plates of the battery module of FIG. 1. FIG. 5A is a perspective view illustrating second plate portions covering side surfaces of first plate portions in the battery module according to FIG. 4. FIG. 5B is an enlarged view schematically illustrating an embodiment of region A in the battery module according to FIG. 5A. FIG. 5C is a cross-sectional view taken along line IV-IV' of FIG. 5B.

Referring to FIGS. 4, 5A, 5B and 5C together, a battery module 100 according to an embodiment of the disclosure may include a plurality of battery cells 10, first plate portions 61 and 62, and second plate portions 63 and 64.

In one or more embodiments, the plurality of battery cells 10 may be arranged such that main surfaces thereof are adjacent to each other along the first direction Y.

In this embodiment, the main surface refers to the surface of the battery cell 10 having the largest area among the side surfaces. Accordingly, arranging the battery cells 10 such that the main surfaces thereof are adjacent to each other means that the largest side surfaces of the battery cells 10 are arranged to face each other.

The first plate portions 61 and 62 may be on the main surfaces of the battery cells 10 located outermost among the plurality of battery cells 10. That is, the first plate portions 61 and 62 may be end plates 61 and 62 included in the housing portion 60 that houses (accommodates) the plurality of battery cells 10.

The second plate portions 63 and 64 may be located on side surfaces of the battery cells 10. That is, the second plate portions 63 and 64 may be side plates 63 and 64 included in the housing portion 60 that houses (accommodates) the plurality of battery cells 10.

The side surface of the battery cell 10 refers to a surface of the battery cell 10 other than the main surface, the upper surface adjacent to the holder 110, and the lower surface adjacent to the bottom plate. In the embodiment in which the battery cell 10 is a prismatic cell in the form of a hexahedron, the side surface refers to a lateral surface of the battery cell 10 other than the main surface.

Side surfaces of the first plate portions 61 and 62 may be covered by the second plate portions 63 and 64.

In some embodiments, the first plate portions 61 and 62 and the second plate portions 63 and 64 may together house (accommodate) the plurality of battery cells 10, with one side surface of each of the second plate portions 63 and 64 contacting and sealing respective side surfaces of the first plate portions 61 and 62.

The first plate portions 61 and 62 each includes a protrusion 65 protruding in the first direction Y.

In some embodiments, the first plate portions 61 and 62 may each include the protrusion 65 that extends from a side surface of the first plate portions 61 and 62 and protrudes along the first direction Y.

In some embodiments, the second plate portions 63 and 64 each includes a first bent portion 66A at least partially surrounding the protrusion 65.

In some embodiments, the second plate portions 63 and 64 may further include a joining structure connecting the first plate and the second plate by penetrating the protrusion. Thus, the first plate and the second plate may be firmly joined.

With the above-mentioned structure, a battery module can be provided that allows for quick and easy connection between battery plates and where the bonding strength between battery plates can be increased.

The first plate portions 61 and 62 may each include the protrusion 65 at a side edge opposite to the surface adjacent to the main surface of the battery cell 10, and the first bent portion 66A of each of the second plate portions 63 and 64 may at least partially surround the protrusion 65, thereby coupling the first plate portions 61 and 62 to the second plate portions 63 and 64.

In some embodiments, the first bent portion 66A may surround the protrusion 65 by extending around a virtual axis in a height direction Z of the second plate portions 63 and 64. In one or more embodiments, the first bent portion 66A refers to a region of each of the second plate portions 63 and 64 that surrounds (at least partially) the protrusion 65.

The protrusion 65 may extend along the height direction Z of the first plate portions 61 and 62. In some embodiments, the protrusion 65 may be formed as a shape protruding in the first direction Y at a side edge opposite to the surface adjacent to the main surface of the battery cell 10, and may extend along the height direction Z of the first plate portions 61 and 62.

When the protrusion 65, which is formed on each of the first plate portions 61 and 62, is surrounded by the first bent portion 66A of each of the second plate portions 63 and 64, a coupling structure between the first plate portions 61 and 62 and the second plate portions 63 and 64 may be achieved. In addition, when a force is applied to the first bent portion 66A and/or a second bent portion 66B, the coupling structure may be released in a simple manner.

The first plate portions 61 and 62 and the second plate portions 63 and 64 may include not only the mechanical coupling through the above-described coupling structure, but may further include a coupling structure in which the protrusion 65 is joined by welding or the like to connect a first plane 651 and a second plane 652. When the coupling structure further includes welding or the like, the coupling between the first plate portions 61 and 62 and the second plate portions 63 and 64 may become more robust.

The protrusion 65 may include the first plane 651, the second plane 652, and a first connecting portion 653.

In one or more embodiments, the first plane 651 may extend along the first direction Y.

In one or more embodiments, the protrusion 65 may include a first plane 651 extending along the first direction Y, a second plane 652 at an angle in a range from approximately 10° to approximately 80° with respect to the first plane 651, and a first connecting portion 653 connecting the first plane 651 to the second plane 652.

In some embodiments, the first plane 651 refers to a surface continuously connected to a side surface of each of the first plate portions 61 and 62 in the protrusion 65.

In addition, the second plane 652 may be at an angle in a range from approximately (about) 10° to approximately (about) 80° with respect to the first plane 651.

In some embodiments, the angle between the second plane 652 and the first plane 651 may be in a range from approximately (about) 10° to approximately (about) 80°, and may be approximately (about) 60°.

When the angle between the second plane 652 and the first plane 651 is less than 10°, the thickness of the protrusion 65 may be reduced, which may in turn reduce the mechanical strength. When the angle between the second plane 652 and the first plane 651 exceeds 80°, the coupling force between the first plate portions 61 and 62 and the second plate portions 63 and 64, which is formed due to the structure in which the first bent portion 66A surrounds the protrusion 65, may be reduced.

In an embodiment in which the angle between the second plane 652 and the first plane 651 is in a range from approximately (about) 10° to approximately (about) 80°, the first bent portion 66A may smoothly form the structure surrounding the protrusion 65, thereby providing excellent coupling force between the first plate portions 61 and 62 and the second plate portions 63 and 64.

The first connecting portion 653 may connect the first plane 651 to the second plane 652.

In one or more embodiments, the first connecting portion 653 refers to a curved surface connecting the first plane 651 and the second plane 652. In an embodiment in which the first connecting portion 653 is a curved surface, the second connecting portion 663, which connects a first contact surface 661 and a second contact surface 662, may also be a curved surface.

The first plane 651 may be parallel (or substantially parallel) to the second plate portions 63 and 64.

In some embodiments, the first plane 651 may be a side surface of the first plate portions 61 and 62 extending along the first direction Y. Accordingly, the second plate portions 63 and 64 covering the side surfaces of the first plate portions 61 and 62 may be located in parallel to (or substantially in parallel to) and in contact with the first plane 651.

The first bent portion 66A may include the first contact surface 661, the second contact surface 662, and a second connecting portion 663.

In one or more embodiments, the first contact surface 661 may be in contact with the first plane 651.

The second contact surface 662 may be in contact with the second plane 652.

The second connecting portion 663 may connect the first contact surface 661 to the second contact surface 662.

In some embodiments, because the first contact surface 661 and the second contact surface 662 of the first bent portion 66A respectively contact the first plane 651 and the second plane 652 of each of the first plate portions 61 and 62, the first plate portions 61 and 62 and the second plate portions 63 and 64 may be coupled together.

In this embodiment, the second connecting portion 663 may or may not be in contact with the first connecting portion 653, and a space may be formed between the second connecting portion 663 and the first connecting portion 653 without being in close contact therebetween.

The second plate portions 63 and 64 may each include a first recessed portion H.

In one or more embodiments, the first recessed portion H may be recessed inwardly from the second plate portions 63 and 64 on a surface opposite to the first contact surface 661. In one or more embodiments, the first recessed portion H may be a groove or notch.

In one or more embodiments, the battery module 100 may further include a coupling portion 67 that may penetrate the protrusion 65 and may couple the protrusion 65 to the first bent portion 66A.

The second plate portions 63 and 64 may each include the first recessed portion H, and the coupling portion 67 may be formed in the first recessed portion H by welding or the like. In some embodiments, by welding or the like in the first recessed portion H, the coupling portion 67 that penetrates the protrusion 65 and connects the first contact surface 661 and the second contact surface 662 may be formed. Accordingly, a virtual central axis of the first recessed portion H may penetrate the first contact surface 661 and the second contact surface 662.

In addition, in one or more embodiments in which the coupling portion 67 is formed by welding or the like in the first recessed portion H included in each of the second plate portions 63 and 64, a position where the welding or the like is initiated may be recognized or determined through a fully automated vision device. In one or more embodiments in which the coupling portion 67 is formed by laser welding, the laser may be focused on the first recessed portion H.

The thickness of the second plate portions 63 and 64 at the position of the first recessed portion H may be in a range from approximately 25 % to approximately 70 % of an average thickness of the second plate portions 63 and 64 at a position where the first recessed portion H is not located.

When the thickness of the second plate portions 63 and 64 at the position where the first recessed portion H is located is less than 25 % of the average thickness of the second plate portions 63 and 64, the thickness of the second plate portions 63 and 64 at the position where the first recessed portion H is included may become too thin, thereby reducing mechanical strength. When the thickness of the second plate portions 63 and 64 at the position where the first recessed portion H is located exceeds 70 % of the average thickness of the second plate portions 63 and 64, a large amount of energy may be consumed to form the coupling portion 67 by heating the first recessed portion H through welding or the like.

In an embodiment in which the thickness of the second plate portions 63 and 64 at the position where the first recessed portion H is located is in a range from approximately (about) 25 % to approximately (about) 70 % of the average thickness of the second plate portions 63 and 64, high mechanical strength may be ensured, and the thickness of the second plate portions 63 and 64 at the position where the first recessed portion H is located is thinner than the average thickness of the second plate portions 63 and 64 where the first recessed portion H is not located such that the first contact surface 651 and the second contact surface 652 may be connected by penetrating the protrusion 65 with an appropriate welding energy.

The second plate portions 63 and 64 may each include a second bent portion 66B.

In one or more embodiments, the second bent portion 66B may extend from the first bent portion 66A.

The second bent portion 66B may be bent in a direction opposite to the first bent portion 66A.

As used herein, the opposite direction refers to a counterclockwise direction when the first bent portion 66A is bent clockwise, and to a clockwise direction when the first bent portion 66A is bent counterclockwise. Accordingly, in an embodiment in which the first bent portion 66A surrounds the protrusion 65 in a clockwise direction, the second bent portion 66B may be bent in a counterclockwise direction, and in an embodiment in which the first bent portion 66A surrounds the protrusion 65 in a counterclockwise direction, the second bent portion 66B may be bent in a clockwise direction.

The second bent portion 66B may include an extension surface 664 and a third connecting portion 665.

In one or more embodiments, the extension surface 664 may extend from the first bent portion 66A and away from the first plate portions 61 and 62, and the third connecting portion 665 may connect the extension surface 664 and the second contact surface 662 to each other.

In some embodiments, the second bent portion 66B may be bent in a direction away from the main surface of the battery cell 10. Accordingly, the second bent portion 66B may include the extension surface 664 that extends from the first bent portion 66A and becomes further away from the first plate portions 61 and 62.

As the extension surface 664 extends away from the first plate portions 61 and 62, a space may be formed between the first plate portions 61 and 62 and the extension surface 664. To detach the first plate portions 61 and 62 and the second plate portions 63 and 64 from each other, a structure enabling the second bent portion 66B to be pulled may be inserted into this space, and through this structure, the second bent portion 66B may be pulled so that the first plate portions 61 and 62 and the second plate portions 63 and 64 may be detached from each other.

In one or more embodiments, because the third connecting portion 665 connects the extension surface 664 and the second contact surface 662 to each other, the second plate portions 63 and 64 may each rotate by a certain angle around a single axis. The single axis may be an axis extending along the height direction Z of the first plate portions 61 and 62 or the second plate portions 63 and 64, or an axis parallel (or substantially parallel) to the height direction Z.

Each of the first plate portions 61 and 62 may include a second recessed portion D.

In one or more embodiments, the second recessed portion D may be recessed inwardly from the first plate portions 61 and 62 and may extend to the second plane 652 of the protrusion 65, and the third connecting portion 665 may be located in the second recessed portion D.

The second recessed portion D may be provided in each of the first plate portions 61 and 62 based on an assembly tolerance that may occur when assembling the first plate portions 61 and 62 and the second plate portions 63 and 64, and the third connecting portion 665 may be located in the second recessed portion D.

In addition, the third connecting portion 665 may be in contact with or without contact with the second recessed portion D, and because the third connecting portion 665 is located in the second recessed portion D, the first plate portions 61 and 62 may be stably coupled to the second plate portions 63 and 64.

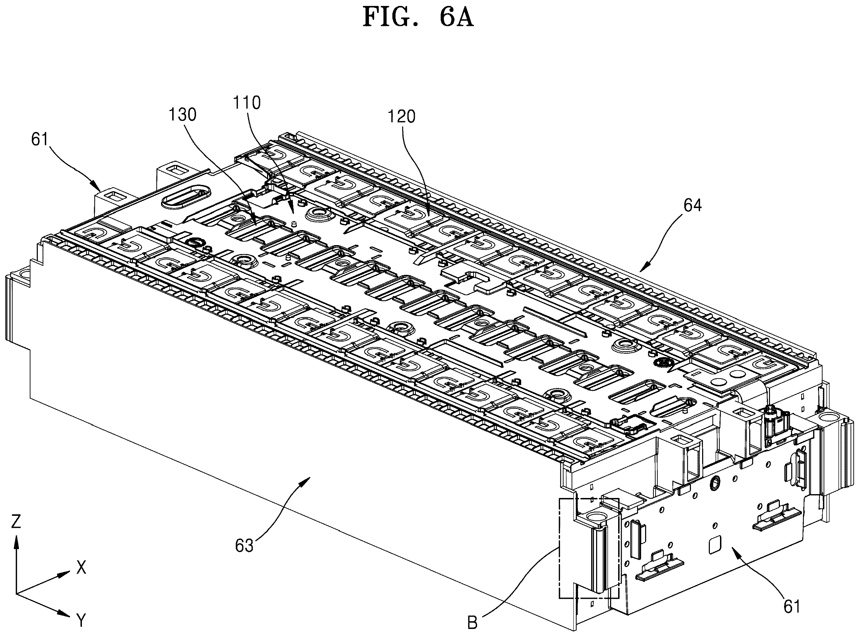

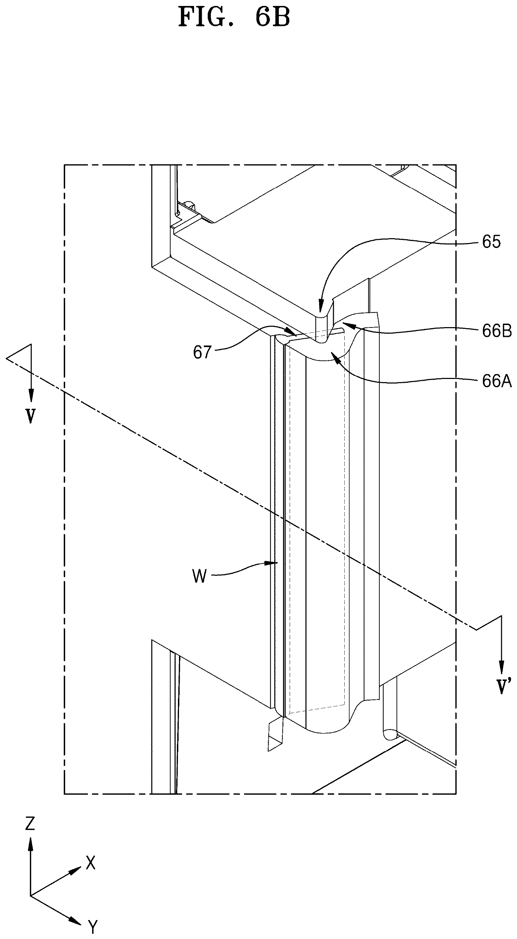

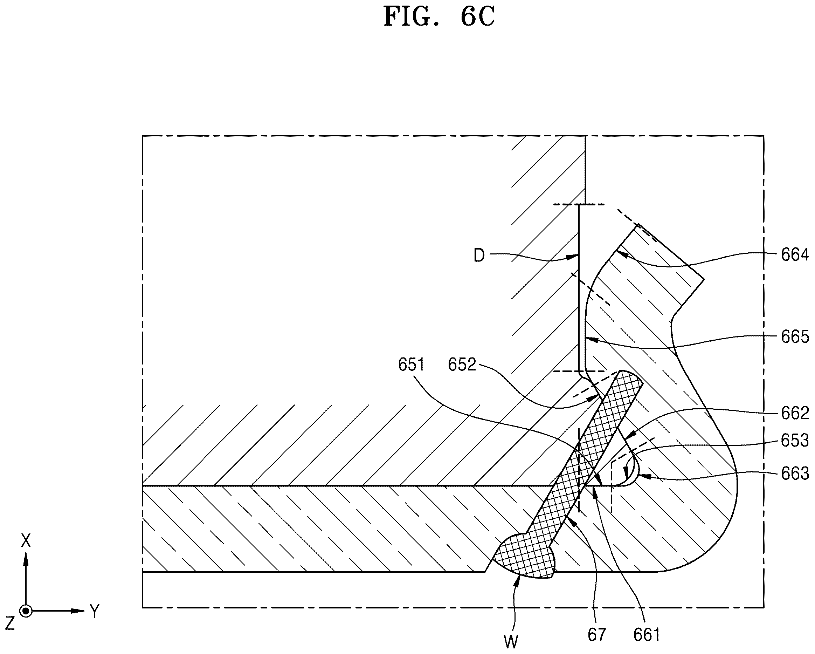

FIG. 6A is a perspective view schematically illustrating an embodiment of a battery module in which a coupling portion that couples a first plate portion and a second plate portion is formed in the battery module according to FIG. 5A. FIG. 6B is an enlarged view schematically illustrating an embodiment of region B in the battery module according to FIG. 6A. FIG. 6C is a cross-sectional view taken along line V-V' of FIG. 6B.

Referring to FIGS. 6A, 6B, and 6C together, a battery module 100 according to another embodiment of the disclosure may include a plurality of battery cells 10, first plate portions 61 and 62, and second plate portions 63 and 64. The battery module 100 according to the embodiment depicted in FIGS. 6A-6C includes all of the technical contents of the battery module 100 according to the embodiment depicted in FIGS. 5A-5C, and redundant descriptions will be omitted.

In one or more embodiments, the second plate portions 63 and 64 may cover side surfaces of the first plate portions 61 and 62.

The first plate portions 61 and 62 may each include a protrusion 65 protruding in the first direction Y.

The second plate portions 63 and 64 may each include a first bent portion 66A at least partially surrounding the protrusion 65.

The battery module may further include a coupling portion 67 that penetrates the protrusion 65 and couples the protrusion 65 and the first bent portion 66A to each other.

In one or more embodiments, each of the first plate portions 61 and 62 may include a welding portion W on a surface opposite to a first contact surface 661, and the coupling portion 67 may be formed by heating the welding portion W.

In some embodiments, by heating the first recessed portion H by welding or the like, the welding portion W may be formed, and the welding portion W may form the coupling portion 67 that penetrates the protrusion 65 in the direction of the virtual axis of the first recessed portion H and couples the protrusion 65 and the first bent portion 66A to each other.

When the protrusion 65 is at least partially surrounded by the first bent portion 66A, two contact surfaces are formed between the protrusion 65 and the first bent portion 66A. The coupling between the first plate portions 61 and 62 and the second plate portions 63 and 64 may be performed by welding or the like at the contact surfaces. In the related art, two welding regions along the height direction Z are formed in order to couple the first plate portions 61 and 62 and the second plate portions 63 and 64 by welding, and thus significant time and economic costs were incurred. However, in the battery module 100 according to an embodiment of the present disclosure, two contact surfaces are formed between the protrusion 65 and the first bent portion 66A. Thus, when welding is performed, the two contact surfaces may be connected by a single welding operation, thereby reducing temporal and economic costs.

That is, the method of coupling the first plate portions 61 and 62 and the second plate portions 63 and 64 by forming the coupling portion 67 may connect the first contact surface 661 and the second contact surface 662 by penetrating the protrusion 65, thereby allowing both surfaces to be joined in one single welding process (or operation). Accordingly, even with a single welding operation, structural rigidity of the first plate portions 61 and 62 and the second plate portions 63 and 64 may be increased, and durability capable of withstanding swelling force generated during charging and discharging of the battery module 100 as well as impact may be ensured.

In one or more embodiments, because the welding portion W is formed by heating the first recessed portion H through welding or the like, the thickness of the second plate portions 63 and 64 at the position where the first recessed portion H is located may be restored to approximately the average thickness of the second plate portions 63 and 64 at a position where the first recessed portion H is not located.

According to embodiments of the disclosure, there is provided a battery module in which the coupling between battery plates is rapid and readily achieved by including only a single coupling portion for coupling the battery plates to each other.

In some embodiments, there is provided a battery module in which the coupling force between battery plates is increased even with a single coupling portion for coupling the battery plates.

Moreover, by including only a single coupling portion for coupling battery plates, a battery module manufactured according to an economical battery module manufacturing process is provided.

However, it will be appreciated by one of ordinary skill in the art that the effects that can be achieved with the disclosure are not limited to what has been particularly described hereinabove and other advantages of the disclosure will be more clearly understood from the foregoing description taken in conjunction with the accompanying drawings.

## Claims

1. A battery module (100) comprising:
a plurality of battery cells (10) arranged such that main surfaces of the plurality of battery cells (10) are adjacent to each other along a first direction (Y);
a first plate portion (61, 62) on a main surface of a battery cell (10) located outermost among the plurality of battery cells (10); and
a second plate portion (63, 64) located on side surfaces of the plurality of battery cells (10),
wherein the second plate portion (63, 64) covers a side surface of the first plate portion (61, 62),
wherein the first plate portion (61, 62) includes a protrusion (65) protruding in the first direction (Y), and
wherein the second plate portion (63, 64) includes a first bent portion (66A) surrounding the protrusion (65).

2. The battery module (100) of claim 1, wherein the protrusion (65) extends along a height direction (Z) of the first plate portion (61, 62).

3. The battery module (100) of claim 1 or 2, wherein the protrusion (65) includes a first plane (651) extending along the first direction (Y), a second plane (652) at an angle in a range from approximately 10° to approximately 80° with respect to the first plane (651), and a first connecting portion (653) connecting the first plane (651) to the second plane (652).

4. The battery module (100) of claim 3, wherein the first plane (651) is parallel to the second plate portion (63, 64).

5. The battery module (100) of claim 3, wherein the first bent portion (66A) includes a first contact surface (661) in contact with the first plane (651), a second contact surface (662) in contact with the second plane (652), and a second connecting portion (663) connecting the first contact surface (661) to the second contact surface (662).

6. The battery module (100) of claim 5, wherein the second plate portion (63, 64) includes a first recessed portion (H) recessed in a depth direction of the second plate portion (63, 64) on a surface opposite to the first contact surface (661).

7. The battery module (100) of claim 6, wherein a thickness of the second plate portion (63, 64) at a position where the first recessed portion (H) is located is in a range from approximately 25 % to approximately 70 % of an average thickness of the second plate portion (63, 64) at a position where the first recessed portion (H) is not located.

8. The battery module (100) of any of claims 5 to 7, wherein:
the second plate portion (63, 64) includes a second bent portion (66B) extending from the first bent portion (66A), and
the second bent portion (66B) is bent in a direction opposite to the first bent portion (66A).

9. The battery module (100) of claim 8, wherein the second bent portion (66B) includes an extension surface (664) extending away from the first plate portion (61, 62) and a third connecting portion (665) connecting the extension surface (664) to the second contact surface (662).

10. The battery module (100) of claim 9, wherein the first plate portion (61, 62) includes a second recessed portion (D) recessed inwardly of the first plate portion (61, 62), and wherein the third connecting portion (665) is in the second recessed portion (D).

11. The battery module (100) according to any of claims 1 to 10, further comprising:
a coupling portion (67) that penetrates the protrusion (65) and couples the protrusion (65) to the first bent portion (66A).

12. The battery module (100) of claim 11, wherein the coupling portion (67) penetrates the protrusion (65) and connects the first contact surface (661) to the second contact surface (662).

13. The battery module (100) of claim 12, wherein the first plate portion (61,62) includes a welding portion (W) on a surface opposite to the first contact surface (661), and wherein the welding portion (W) is configured to form the coupling portion (67) by being heated.
